# EUROPÄISCHE PATENTSCHRIFT

(11) **EP 3 159 070 B1**
(45) Veröffentlichungstag und Bekanntmachung des Hinweises auf die Patenterteilung: **13.03.2019**
(21) Anmeldenummer: 16400001.0
(22) Anmeldetag: 20.01.2016
(51) Int. Cl.: B21D 28/16, B21D 37/08, B21D 43/06, B21D 53/28

(54) **VERFAHREN UND WERKZEUG ZUR HERSTELLUNG VON DACHZAHN - TRÄGERRINGEN**
METHOD AND TOOL FOR PRODUCING TRAPEZOIDAL TOOTH SUPPORT RINGS
PROCÉDÉ ET OUTIL DE FABRICATION DE BAGUES SUPPORT À DENTURE TRAPÉZOÏDALE

(30) Priorität: 22.10.2015 DE 102015013831
(43) Veröffentlichungstag der Anmeldung: 26.04.2017
(73) Patentinhaber: ATF Auer Teilefertigung GmbH, 08280 Aue (DE)
(72) Erfinder: Tautenhahn, Jens, 08 289 Schneeberg (DE); Gehr, Mike, 08134 Härtensdorf (DE)
(74) Vertreter: Otten, Roth, Dobler & Partner mbB Patentanwälte

(56) Entgegenhaltungen:
- EP-A1- 2 263 812
- DE-A1-102009 020 882
- US-A1- 2006 086 171
- US-A1- 2009 090 007
- US-A1- 2015 174 635

## Beschreibung

Die Erfindung geht von dem im Oberbegriff des Patentanspruches 1 definierten Herstellungsverfahren und dem im Oberbegriff des Patentanspruches 4 definierten Werkzeug zur Durchführung dieses Verfahrens aus.
Dachzahn-Trägerringe, die an Kupplungskörpern angeordnet oder ein Körperteil von diesen sind, kommen in Synchronisations-Systemen von Fahrzeuggetrieben zum Einsatz. Dabei werden unterschiedliche Drehzahlen des zu schaltenden Gangrades und der Welle aneinander angeglichen. Dies bedingt eine hohe Maßgenauigkeit und Gratfreiheit sowie eine gleichbleibend gute Ausformung und Materialfestigkeit in der profilgebenden Zahnausformung und in der Dachzahn-Ausbildung.

Ziel der erfinderischen Ausbildung des Verfahrens ist es, ausschließlich durch Umformen und Feinschneiden in nur einem, ebenfalls erfinderisch ausgebildeten, Werkzeug diese Funktionsteile von Synchronisations-Systemen unter Erfüllung der oben genannten Qualitätsforderungen fertig herzustellen, ohne dass qualitätsverbessernde Nach- und Fertig-Bearbeitungen erforderlich sind.

Beispielhaft für vorbekannte Verfahrensausbildungen des Standes der Technik sollen hier
- DE 10 2005 054 237 A1 und
- DE 4200418 C1
benannt sein, in denen für die Herstellung von Dachverzahnungen und Hinterlegungen ein aufwendiges Fräsen, mit einem entsprechend ausgebildeten Sonderfräser als Werkzeug, vorgeschlagen werden.
Außerdem wird in
- DE 10 2005 053 989 B4
ein Herstellungsverfahren vorgeschlagen, wobei die Dachverzahnung und die Hinterlegungen, in einem kurzen Blechstreifen durch Stoßen und Schneiden hergestellt sind und der Blechstreifen nachfolgend zu einem Ring gebogen wird, wobei die Blechstreifenenden mit ihren Fugen verbunden werden. Die Sicherung einer maßgenauen und dauerhaften Kreisringform bedarf hoher zusätzlicher Verfahrens- und Werkzeugaufwendungen.
Durch Schneiden oder Ausschneiden der profilgebenden Außenverzahnung sowie Hinterlegungen und durch Umformen oder Prägen der Dachzahn-Ausbildung, in jeweils nur einem Verfahrensschritt in nur einer Werkzeugstufe, in Platinen oder in Blechstreifen ist die Verfahrens- und die Werkzeug-Ausbildung in
- DE 35 19 810 A1
- DE 10 2009 020 882 A1 und in
- EP 2 263 812 A1
gekennzeichnet.
Der Rationalität dieser Verfahrensabläufe, mit nur einem Werkzeughub die Zahnausformung und die Dachzahn-Ausbildung zu realisieren, stehen die hohen Qualitätsanforderungen, die sich aus der Funktion der Dachzahn-Trägerringe ableiten, mit einem geringen Verwendungsanteil entgegen. Die Nachteile der Verfahrens- und der Werkzeug-Ausbildung dieser Lösungen des Standes der Technik sind:
- die allein durch die Werkzeugführung von Ober- und Unterwerkzeug bedingte und dadurch beschränkte Positioniergenauigkeit der Verfahrensschritte und der Stempelausführung insbesondere der Prägestempel
- eine von dem Blechdicken-Maß und der Materialfestigkeit unabhängige Verfahrensschritt-Anzahl und Werkzeugausbildung
- fehlende Werkzeugkomponenten, um Zahnprofil- und Dachzahn-Fehlausbildungen und unzulässige Toleranzüberschreitungen gegenüber Sollmaßen auszuschließen
- verfahrensbedingte Gratbildungen und größere Kantenabrundungen.

Die Problemstellung zum Ausschluss dieser nachteiligen Verfahrens- und Werkzeugausbildungen ist:
- eine veränderte Verfahrensstruktur, bestehend aus einer ausreichenden Anzahl von positionierenden, schneidenden und umformenden Verfahrensschritten
- eine Werkzeugausbildung als mehrstufiges Schneid- und Formwerkzeug mit Positions-Suchstempeln, Schneid- und Formwerkzeugen in einer qualitätssichernden Anzahl Werkzeugstufen.

Diese, das Verfahren zur Herstellung der Dachzahn-Trägerringe betreffende Problemstellung, wird durch die Merkmale des Patentanspruches 1 gelöst.
Die entlang der Platinen-Einlegerichtung zugeführten vorgefertigten Platinen oder der entlang der Blechstreifen-Zuführungsrichtung von einem Coil abgerollte und zugeführte Blechstreifen absolvieren eine erfinderische Ablauffolge von nacheinander durchzuführenden sowie angeordneten Verfahrensschritten.
Es beginnt mit dem Schneiden von Positionieröffnungen und Spannungs-Ausgleichsöffnungen als Innen-Durchbrüche in den runden Blechteilen. Dies setzt sich mit einer Mittenlagen-Vorpositionierung, mit einem nachfolgenden oberseitigen Durchsetzen und mit einem gleichzeitigen unterseitigen Abprägen eines Außenrandes an jedem Blechteil fort.
Anschließend erfolgen Mittenlagen-Genaupositionierungen gemeinsam mit einem jeweils nachfolgenden Vorprägen der Dachform, Zwischenprägen der Dachform und einer erhabenen Vorpositionier-Durchsetzung und einem Fertigprägen der Dachform. Mit der verdrehgesicherten Mittenlagen-Genaupositionierung, welche das Ergebnis einer Nachbearbeitung der Positionieröffnungen in jedem Blechteil durch Schneiden ist, erfolgte mit dem Fertigprägen der Dachform, dem Gesamtausschnitt der Ringform, mit dem Ausschneiden der profilgebenden Zahnform und dem Abfall-Innenausschnitt des Blechteiles aus dem Ringteil bzw. dem Abfall-Abtrennschnitt der Blechscheiben-Haltegitter die Herausarbeitung der Ringform.
Mit der nachfolgenden Ring-Genaupositionierung, als Ergebnis des Schneidens von Positionier-Fenstern in jedes Ringteil, mit dem nachfolgenden Kanten-Verprägen sowie Prägen einer umlaufenden Fase an jedem Ringteil und dem Prägen der Hinterlegungen erfolgt die Fertigstellung der Dachzahn-Trägerringe. Im Ergebnis einer Transport-Positionierung auf einer Fertigring-Transporteinrichtung werden die Ringe gerichtet zu einem Fertigring-Speicher hin transportiert und dort vereinzelt gespeichert. Außerdem erfolgt eine gesonderte Abfallausbringung.

Ergänzende Verfahrensmerkmale sind in den Patentansprüchen 2 und 3 benannt. Sie betreffen die für diese Positionierungen genutzten Positionieröffnungen in den Blechteilen sowie die Bewegung der Positionier-Suchstempel, den zeitgleich sowie koordinierten Bewegungsablauf des Oberwerkzeuges und die kantenstabilisierende Materialverfestigung im Ringteil.

Die das Werkzeug zur Herstellung der Dachzahn-Trägerringe betreffende Problemstellung wird durch die Merkmale der Patentansprüche 4 und 5 gelöst.
Die Positions-Suchstempel, mit denen die Positionierung von Platinen und die Positionierung eines Blechstreifens in Werkzeugstufen über Positionierungsöffnungen in Blechteilen erfolgt, sind im Unterwerkzeug oder gemeinsam mit einem Durchsetz-Prägestempel, mit Gegendruckstempeln zu Dachform-Prägestempeln, mit einem Ringfasen-Prägestempel und mit Fensterkontur-Prägestempeln sowie mit einem Zahnkontur-Schneidstempel, einem Außenkontur-Schneidstempel und einem Innenkontur-Schneidstempel in Werkzeugstufen im Oberwerkzeug eines mehrstufigen Schneid- und Umformwerkzeug angeordnet.
Daneben sind auch hakenförmige Abstreif- und Halteelemente, die an mehreren Werkzeugstufen beidseitig quer- und entgegengerichtet einen Blechstreifen oder ein bereits ausgeschnittenes Blechscheiben-Haltegitter positionieren und halten, am Unterwerkzeug angeordnet. Dabei sind Blechstreifen an ihren Rändern stirnseitig in einer Führungsnut von Abstreif- und Halteelementen aufgenommen. Außerdem sind am und im Unterwerkzeug für ein quergerichtetes Abtrennen eines Blechscheiben-Haltegitters eine Trennschneid-Einrichtung und zur Führung von Positions-Suchstempeln sowie von Schneidstempeln Matrizen angeordnet.

Ergänzende Ausbildungsmerkmerkmale des Werkzeuges sind in den Patentansprüchen 6 und 7 benannt. Sie betreffen die Ausbildung der Positions-Suchstempel und deren Beiordnung zu Prägestempeln.

Die Erfindung ist in den Figuren vereinfacht dargestellt und im folgenden Teil der Beschreibung näher erläutert.

Gezeigt wird in
- Fig. 1, Fig. 2 und Fig. 3: eine Prinzipdarstellung des gerichteten Verfahrenablaufes und aller Verfahrensschritte an einem Unterwerkzeug
- Fig. 4: eine Teilansicht des Unterwerkzeuges für die Verfahrensschritte Durchsetzen, Abprägen des Außenrandes und Dachform-Prägen an Platinen
- Fig. 5 und Fig. 6: Teilansichten des Oberwerkzeuges für die Verfahrensschritte Schneiden, Durchsetzen, Abprägen des Außenrandes, Dachform-Prägen und Ausschneiden von Blechteilen aus einem Blechstreifen
- Fig. 7 und Fig. 8: Schnittdarstellungen der Werkzeugstufe Dachform-Prägen in den Zuständen Prägen und Blechstreifen-Transfer
- Fig. 9.1 bis Fig 9.5: Ausbildungsformen von Positionieröffnungen

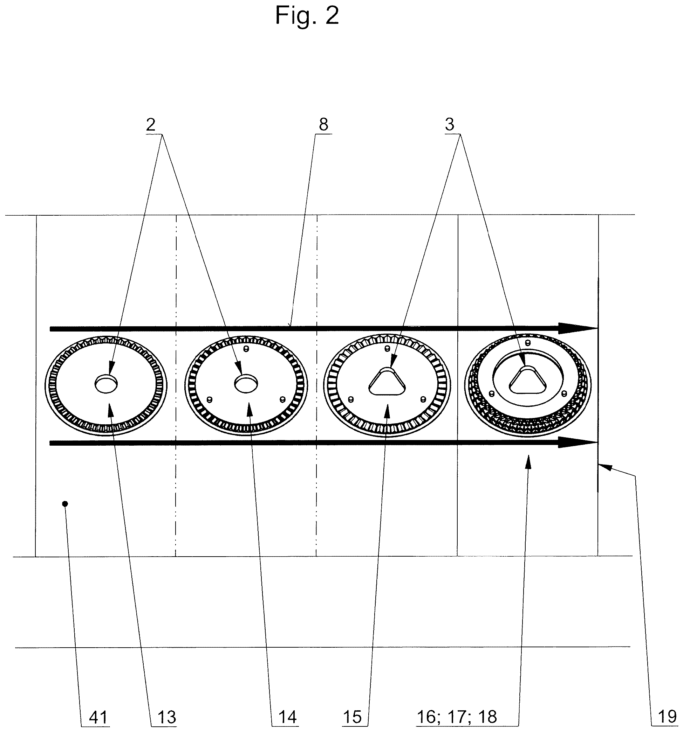

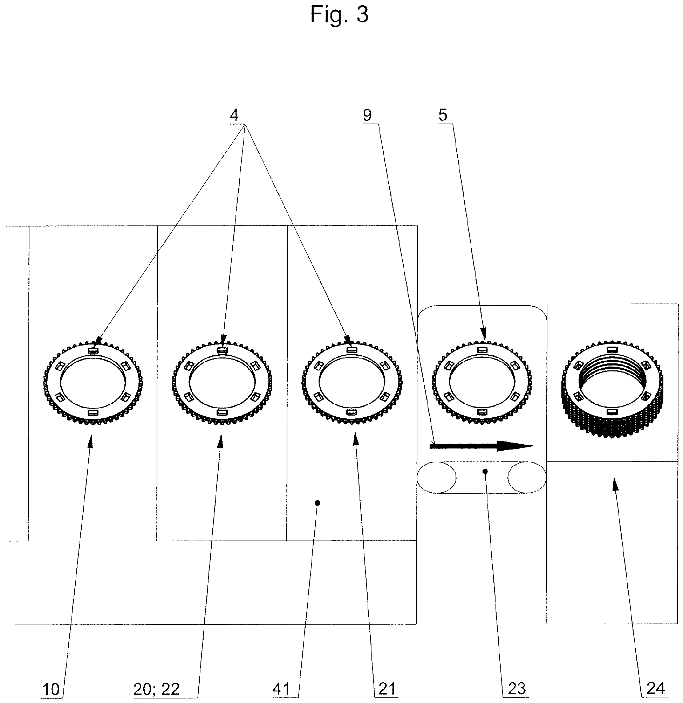

Die beispielhafte Beschreibung des Ablaufes eines Herstellungsverfahrens in der Verfahrensablaufrichtung 8 beinhaltet alternativ die Varianten Dachzahn-Trägerringe als Ringteile 49 einerseits aus vorgefertigten bereits gelochten Platinen 51 oder andererseits als Blechteile 48 aus Blechstreifen 50 herzustellen.

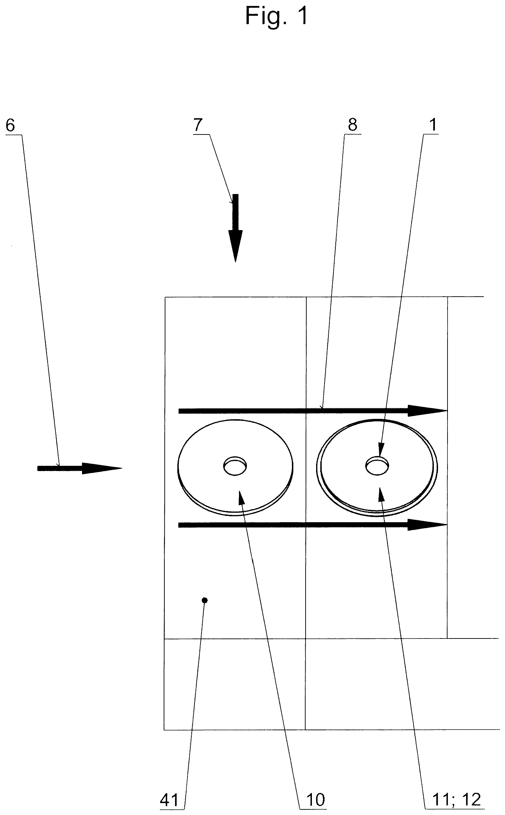

In Fig. 1 ist deshalb alternativ die Platinen-Einlegerichtung 7 und die Blechstreifen-Zuführrichtung 6 dargestellt, wobei in dem Verfahrensschritt 10 das Schneiden eines Positionier-Rundloches 52 stattfindet. Die damit geschaffene Mittenlage-Vorpositionierung 1 findet gemeinsam mit den nachfolgenden Verfahrensschritten Durchsetzen 11 des Blechteiles 48 und Abprägen 12 des Außenrandes am Blechteil statt.
In der Verfahrensablaufrichtung 8 folgend, sind in Fig. 2 die Verfahrensschritte Mittenlagen-Genaupositionierung 2 mit nachfolgendem Vorprägen 13 und Zwischenprägen 14 der Dachform sowie das folgende Prägen einer erhabenen Vorpositionier-Durchsetzung dargestellt. Die verdrehgesicherte Mittenlagen-Genaupositionierung 3 ist deshalb an die Schaffung eines Positionier-Dreieckloches 53 durch Nachschneiden des Positionier-Rundloches 52 gebunden, welches gemeinsam mit den Verfahrensschritten Fertigprägen 15 der Dachform, Gesamtausschnitt der Ringform 16, Ausschneiden der profilgebenden Zahnform 17 und Abfall-Innenausschnitt 18 stattfindet. An diese Verfahrensschritte schließt der Abfall-Abtrennschnitt 19, mit dem das Blechscheiben-Haltegitter stückweise abgetrennt und über eine gesonderte Abfallausbringung von den anschließenden Verfahrensschritten ferngehalten wird, an.
Der weitere Verfahrensablauf ist in Fig. 3 dargestellt, wobei die verdrehgesicherte Ring-Genaupositionierung 4 mit den Verfahrensschritten Schneiden 10 Kanten-Verprägen 20, Prägen der umlaufenden Fase 22 und Prägen der Hinterlegungen 21 funktionell verbunden ist.
Mit der Transport-Positionierung 5 erfolgt in der Ring-Ausbringrichtung 9 auf einer Fertigring-Transporteinrichtung 23 die Ausbringung der fertig hergestellten vereinzelten Dachzahn-Trägerringe zu einem Fertigring-Speicher 24 hin.

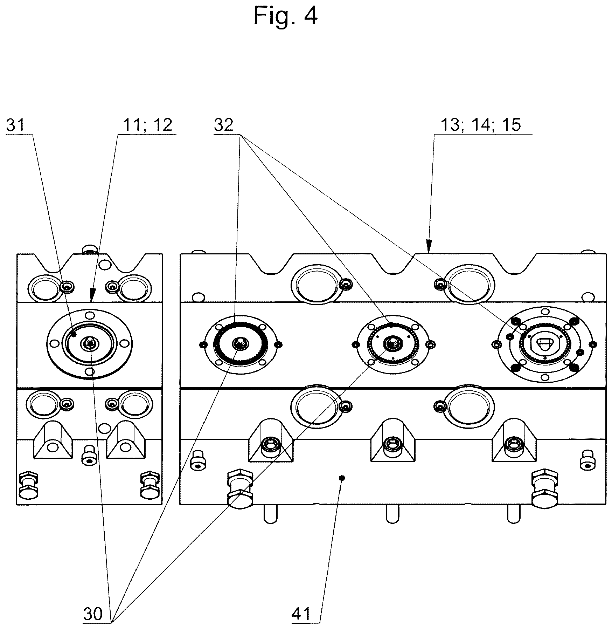

In Fig. 4 sind die fünf fertigungswesentlichen Verfahrensschritte für die Ringqualität Durchsetzen 11 des Blechteiles und Abprägen des Außenrandes des Blechteiles sowie Vorprägen 13, Zwischenprägen 14 und Fertigprägen 15, die mit Dachform-Prägestempeln 32 durchführbar sind, dargestellt.

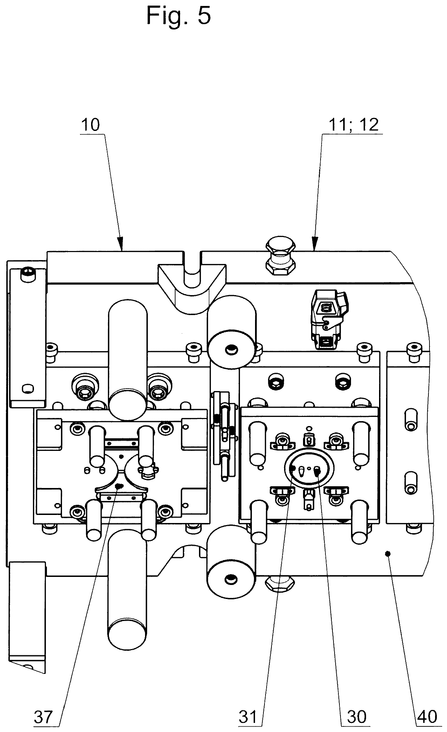

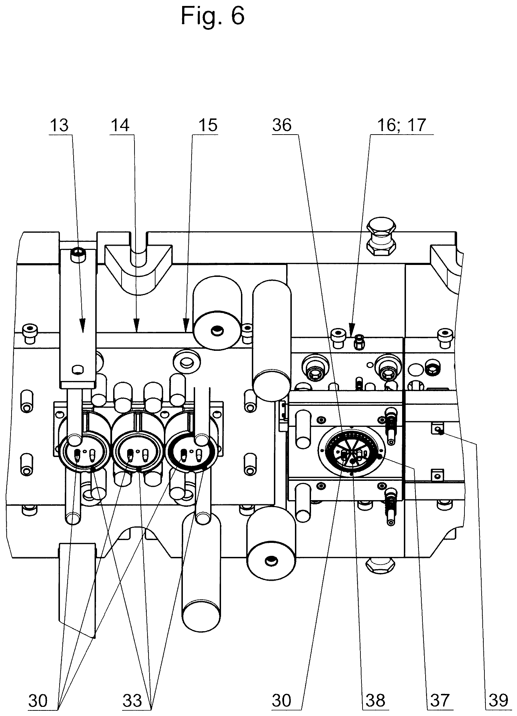

In Fig. 5, Fig. 6, Fig. 7 und Fig. 8 sind beispielhaft die funktionswesentlichen Verfahrensschritte Schneiden 10 von zwei Positionier-Rundlöchern 52, zwei Spannungs-Ausgleichsöffnungen 55 und der runden Außenkontur der späteren Blechteile 48 aus einem Blechstreifen 50 sowie die zur Verfahrensdurchführung benötigten Positions-Suchstempel 30, Außenkontur-Schneidstempel 37, Durchsetz-Prägestempel 31, Gegendruckstempel 33 zu den Dachform-Prägestempeln 32, Innenkontur-Schneidstempel 38, Außenkontur-Schneidstempel 37 und die Trennschneid-Einrichtung 39 als Sicht auf das Oberwerkzeug 40 dargestellt.

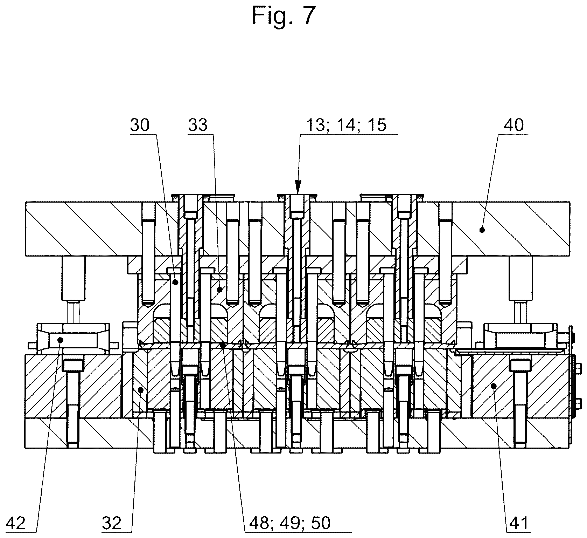

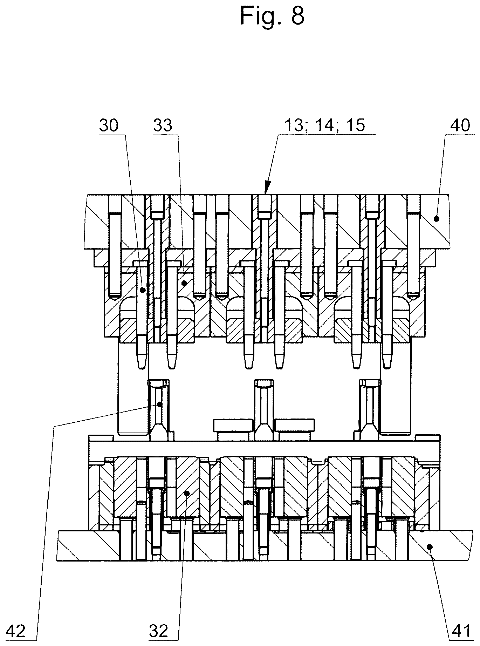

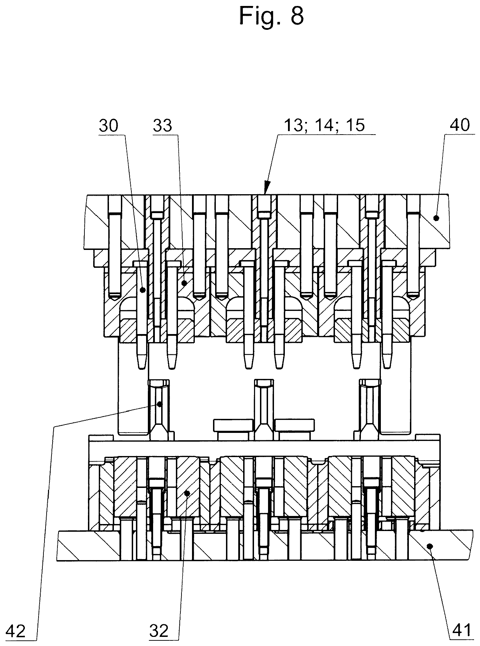

Die Darstellungen Fig. 7 und 8 zeigen die Werkzeugstufe für die Verfahrensschritte Vorprägen 13, Zwischenprägen 14 und Fertigprägen 15 unter dem Aspekt der Verfalrensdurchführung mit einem Blechstreifen 50.

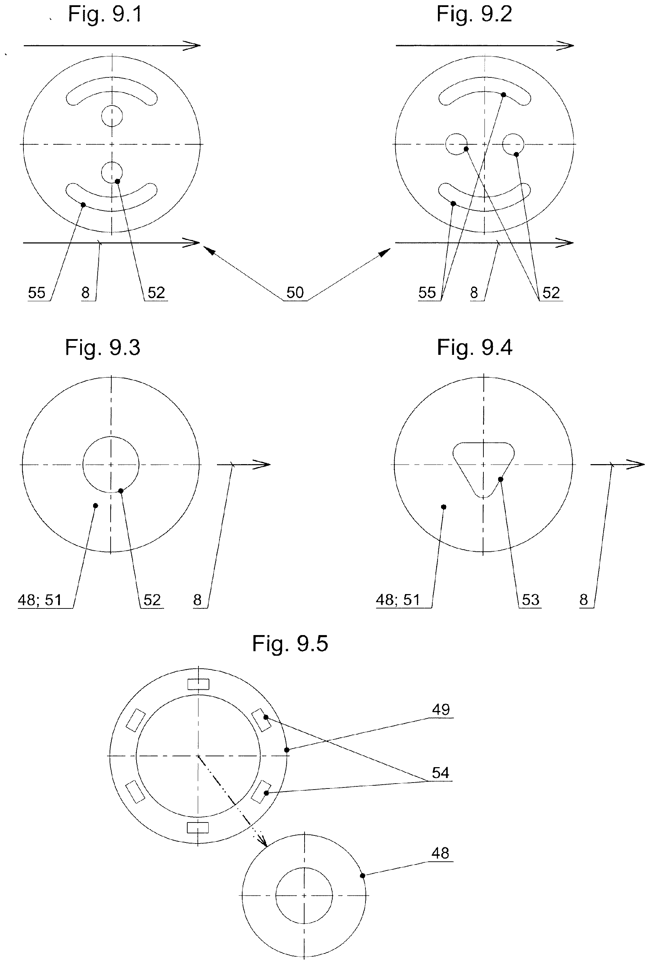

Die in Fig. 9.1 bis Fig. 9.5 beispielhaft dargestellten Positionieröffnungen sind als Postionier-Rundlöcher 52, Positionier-Dreiecklöcher 53 und als Positionier-Fenster 54 mit entsprechenden Querschnittsformen ausgebildet. Diese entsprechen der Matrizengestaltung für die Positions-Suchstempel 30.

**Bezugszeichenliste**

| | | |
|---|---|---|
| 1 | Mittenlagen-Vorpositionierung | |
| 2 | Mittenlagen-Genaupositionierung | |
| 3 | verdrehgesicherte Mittenlagen-Genaupositionierung | |
| 4 | verdrehgesicherte Ring-Genaupositionierung | |
| 5 | Transport-Positionierung | |
| | | |
| 6 | Blechstreifen-Zuführrichtung | |
| 7 | Platinen-Einlegerichtung | |
| 8 | Verfahrensablaufrichtung | |
| 9 | Ring-Ausbringrichtung | |
| | | |
| 10 | Schneiden | der Positionieröffnungen |
| 11 | Durchsetzen | des Blechteiles 48 |
| 12 | Abprägen | des Außenrandes |
| 13 | Vorprägen | der Dachform |
| 14 | Zwischenprägen | der Dachform und |
| | Prägen | der erhabenen Vorpositionier-Duchsetzung |
| 15 | Fertigprägen | der Dachform |
| 16 | Gesamtausschnitt | der Ringform |
| 17 | Ausschneiden | der profilgebenden Zahnform |
| 18 | Abfall-Innenausschnitt | |
| 19 | Abfall-Abtrennschnitt | |
| 20 | Kanten-Verprägen | |
| 21 | Prägen | der Hinterlegungen |
| 22 | Prägen | der umlaufenden Fase |
| | | |
| 23 | Fertigring-Transporteinrichtung | |
| 24 | Fertigring-Speicher | |
| 30 | Positions-Suchstempel | |
| 31 | Durchsetz-Prägestempel | |
| 32 | Dachform-Prägestempel | |
| 33 | Gegendruckstempel | zu Dachform-Prägestempeln 32 |
| | | |
| 36 | Zahnkontur-Schneidstempel | |
| 37 | Außenkontur-Schneidstempel | |
| 38 | Innenkontur-Schneidstempel | |
| 39 | Trennschneid-Einrichtung | für Blechscheiben-Haltegitter |
| 40 | Oberwerkzeug | |
| 41 | Unterwerkzeug | |
| 42 | Abstreif- und Halteelemente | für Blechstreifen 50 und |
| | | für Blechscheiben-Haltegitter |
| | | |
| 48 | Blechteil(e) | |
| 49 | Ringteil(e) | |
| 50 | Blechstreifen | |
| 51 | Platinen | |
| 52 | Positionier-Rundloch | |
| 53 | Positionier-Dreieckloch | |
| 54 | Positionier-Fenster | im Ringteil 49 |
| 55 | Spannungs-Ausgleichsöffnungen | im Blechteil 48 |

## Patentansprüche

1. Verfahren zur Herstellung von Dachzahn-Trägerringen, die an Kupplungskörpern in Synchronisations-Systemen von Fahrzeuggetrieben zum Einsatz kommen, aus vorgefertigten Platinen oder aus von einem Coil abgerollten Blechstreifen, **dadurch gekennzeichnet,**
**dass**, in einem mehrstufigen Schneid- und Formwerkzeug an entlang der Platinen-Einlegerrichtung (7) zugeführten vorgefertigten Platinen (51) oder an entlang der Blechstreifen-Zuführrichtung (6) zugeführte Blechstreifen (50), in der Verfahrensablaufrichtung (8) nacheinander ablaufend die Verfahrensschritte
- Schneiden (10) von Positionieröffnungen und von Spannungs-Ausgleichsöffnungen (55) als Innen-Durchbrüche in den runden Blechteilen (48),
- Mittenlagen-Vorpositionierung (1) gemeinsam mit einem nachfolgenden oberseitigen Durchsetzen (11) und einem gleichzeitigen unterseitigen Abprägen (12) eines Außenrandes an jedem Blechteil (48),
- Mittenlagen-Genaupositionierung (2) gemeinsam mit einem jeweils nachfolgenden Vorprägen (13) der Dachform, Zwischenprägen (14) der Dachform und einer erhabenen Vorpositionier-Durchsetzung und einem Fertigprägen (15) der Dachform,
- verdrehgesicherte Mittenlagen-Genaupositionierung (3) als Ergebnis einer Nachbearbeitung der Positionieröffnungen in jedem Blechteil (48) durch Schneiden (10) gleichzeitig mit dem Fertigprägen (15) der Dachform und des Gesamtausschnittes (16) der Ringform, mit dem Ausschneiden (17) der profilgebenden Zahnform und dem Abfall-Innenausschnitt (18) des Blechteiles (48) aus dem Ringteil (49) bzw. dem Abfall-Abtrennschnitt (19) der Blechscheiben-Haltegitter,
- verdrehgesicherte Ring-Genaupositionierung (4) als Ergebnis des Schneidens (10) von Positionier-Fenstern (54) in jedes Ringteil (49) gemeinsam mit dem nachfolgenden Kanten-Verprägen (20), dem Prägen (22) einer umlaufenden Fase an jedem Ringteil (49) und dem Prägen (21) der Hinterlegungen sowie
- eine Transport-Positionierung (5) auf einer Fertigring-Transporteinrichtung (23), hin zu einem Fertigring-Speicher (24) gerichtet, sowie eine gesonderte Abfallausbringung aus dem mehrstufigen Form- und Schneidwerkzeug
angeordnet sind.

2. Verfahren zur Herstellung von Dachzahn-Trägerringen nach Patentanspruch 1, **dadurch gekennzeichnet,**
**dass** die für die Positionierungen (1 bis 4) genutzten Positionieröffnungen in den Blechteilen (48) der Platinen (51) oder der Blechstreifen (50), abhängig von der Verfahrensablaufrichtung (8), bei der
- Mittenlagen-Vorpositionierung (1) und
- Mittenlagen-Genaupositionierung (2) mindestens ein Positionier-Rundloch (52),
- bei der verdrehgesicherten Mittenlagen-Genaupositionierung (3) ein zentrisches Positions-Dreieckloch (53)
und bei der
- verdrehgesicherten Ring-Genaupositionierung (4) eine stirnseitige symmetrische Anordnung von mindestens zwei Positionier-Fenstern (54) im Ringteil (49)
sind und
**dass** die Positionierungen (1 bis 4) mittels der durch das Oberwerkzeug (40) oder das Unterwerkzeug (41) bewegten längeren Positions-Suchstempel (30) in den Positionieröffnungen der Blechteile (48) und Ringteile (49) eher als die Verfahrensschritte, die mittels kürzerer Schneid- und Prägestempeln durchgeführt werden, beginnen.

3. Verfahren zur Herstellung von Dachzahn-Trägerringen nach Patentanspruch 1 und 2, **dadurch gekennzeichnet,**
**dass** mittels des durch eine Presse bewegten Oberwerkzeuges (40) alle Verfahrensschritte schrittweise zeitgleich und koordiniert durchführbar sowie mittels sensorischer Zustandsabfragen kontrollierbar sind und
**dass** mit den Verfahrensschritten Durchsetzen (11), Abprägen eines Außenrandes (12) und Prägen (13, 14, 15) eine die Dach- und Zahnformkanten stabilisierende Materialverfestigung im Ringteil (49) herstellbar ist.

4. Werkzeug zur Herstellung von Dachzahn-Trägerringen nach dem in den Patentansprüchen 1 bis 3 beschriebenen Verfahren, **dadurch gekennzeichnet,**
**dass** Positions-Suchstempel (30), mit denen ein Blechstreifen (50) in den Positionieröffnungen von Blechteilen (48) positioniert ist, gemeinsam mit einem Durchsetz-Prägestempel (31), mit Gegendruckstempeln (33) zu Dachform-Prägestempeln, mit einem Ringfasen-Prägestempel und einem Fensterkontur-Prägestempel sowie mit einem Zahnkontur-Schneidstempel (36), einem Außenkontur-Schneidstempel (37), einem Innenkontur-Schneidstempel (38) in Werkzeugstufen (10 bis 17) am Oberwerkzeug (40) und
**dass** hakenförmige Abstreif- und Halteelemente (42), die an mehreren Werkzeugstufen beidseitig quer- und entgegengerichtet einen Blechstreifen (50) oder ein ausgeschnittenes Blechscheiben-Haltegitter, stirnseitig in einer Führungsnut aufgenommen, positionieren und halten, ebenso wie eine Trennschneid-Einrichtung (39), zum quergerichteten Abtrennen eines Blechscheiben-Haltegitters, und Matrizen von Positions-Suchstempeln (30) und Schneidstempeln (36 bis 38) am und im Unterwerkzeug (41) eines mehrstufigen Schneid- und Formwerkzeuges angeordnet sind.

5. Werkzeug zur Herstellung von Dachzahn-Trägerringen nach dem im Patentanspruch 1 - 3 beschriebenen Verfahren, **dadurch gekennzeichnet,**
**dass** Positions-Suchstempel (30) für die Positionierung von Platinen (51) in den Werkzeugstufen Durchsetzen (11), Abprägen (12), Vorprägen (13), Zwischenprägen (14) und Fertigprägen (15), entgegengerichtet zu Präge- und Schneidstempeln am Unterwerkzeug (41) eines mehrstufigen Schneid- und Formwerkzeuges angeordnet sind und
**dass** drei Dachform-Prägestempel (32) für das Vorprägen (13), Zwischenprägen (14) und Fertigprägen (15) von Dachformen eine Werkzeugstufe am Unterwerkzeug (40) bilden.

6. Werkzeug zur Herstellung von Dachzahn-Trägerringen nach Patentanspruch 4 und 5, **dadurch gekennzeichnet,**
**dass** die Positions-Suchstempel (30) Bestandteil von glockenförmig ausgebildeten Durchsetz-Prägestempeln (31) oder Dachform-Prägestempeln (32) oder Gegendruckstempeln (33) sind und gemeinsam funktionsbewegt sind.

7. Werkzeug zur Herstellung von Dachzahn-Trägerringen nach Patentanspruch 4 bis 6, **dadurch gekennzeichnet,**
**dass** das vordere Suchteil jedes Positions-Suchstempels (30) konisch mit einem geringeren Durchmesser- oder Querschnittsmaß als die Durchmesser- oder Querschnittsmaße von Positionier-Rundlöchern (52), Positionier-Dreiecklöchern (53) oder von Positionier-Fenstern (54) auf einem Blechteil (48) oder auf einem Ringteil (49) ausgebildet ist.

## Claims

1. Method for producing trapezoidal tooth support rings which are used on coupling members in synchronizing systems of vehicle transmissions, from prefabricated blanks or from a sheet-metal strip unwound from a coil,
**characterized in that**
in a multi-stage cutting and forming tool on prefabricated blanks (51) that are fed along the blank-insertion direction (7), or on sheet-metal strips (50) that are fed along the sheet-metal-strip-infeed direction (6), the following method steps are successively disposed in the direction of the method sequence (8):
- cutting (10) positioning openings and stress-equalization openings (55) as internal breakouts in the round sheet-metal parts (48);
- central-position pre-positioning (1) conjointly with subsequent stamping (11) on the upper side and simultaneous impressing (12) on the lower side of an external periphery on each sheet-metal part (48);
- central-position precision-positioning (2) conjointly with in each case subsequent pre-embossing (13) of the trapezoidal shape, intermediate embossing (14) of the trapezoidal shape and of a relief pre-positioning stamping, and final embossing (15) of the trapezoidal shape;
- rotationally secured central-position precision-positioning (3) as a result of post-processing of the positioning opening in each sheet-metal part (48) by cutting (10) simultaneously with the final embossing (15) of the trapezoidal shape and the complete cutting (16) of the ring shape, with cutting out (17) the profile-imparting tooth shape and the internal scrap fragment (18) of the sheet-metal part (48) from the ring part (49), or the scrap-severing cut (19) of the sheet-metal disk-holding skeleton;
- rotationally secured precision-positioning (4) of the ring as a result of cutting (10) positioning windows (54) in each ring part (49) conjointly with the subsequent edge-embossing (20), the embossing (22) of an encircling chamfer on each ring part (49), and the embossing (21) of the contact locations, and
- transport-positioning (5) on a finished-ring transport installation (23) directed towards a finished-ring storage (24), as well as separately discharging scrap from the multi-stage forming and cutting tool.

2. Method for producing trapezoidal tooth support rings according to Claim 1,
**characterized in that**
the positioning openings used for the positioning actions (1 to 4) in the sheet-metal parts (48) of the blanks (51) or the sheet-metal strips (50), depending on the direction of the method sequence (8), in the case of the
- central-position pre-positioning (1) and the
- central-position precision-positioning (2) are at least one positioning round bore (52);
- in the case of the rotationally secured central-position precision-positioning (3) are a centric position triangle bore (53);
and in the case of
- the rotationally secured precision-positioning (4) of the ring is a symmetrical disposal of at least two positioning windows (54) on the end side in the ring part (49); and
**in that** the positioning actions (1 to 4) by means of the longer position-seeking dies (30) moved by the upper tool (40) or the lower tool (41) in the positioning openings of the sheet-metal parts (48) and ring parts (49) start earlier than the method steps which are carried out by means of shorter cutting and embossing dies.

3. Method for producing trapezoidal tooth support rings according to Claim 1 and 2,
**characterized in that**
by means of the upper tool (40) that is moved by a press all method steps are capable of being carried out step-by-step in a simultaneous and coordinated manner, and are capable of being controlled by means of sensor-based status scans; and
**in that** by way of the method steps of stamping (11), impressing an external periphery (12), and embossing (13, 14, 15) a material strengthening that stabilizes the trapezoidal and tooth-shaped edges is producible in the ring part (49).

4. Tool for producing trapezoidal tooth support rings by the method described in Claims 1 to 3, **characterized in that**
the position-seeking dies (30) by way of which a sheet-metal strip (50) is positioned in the positioning openings of sheet-metal parts (48), conjointly with a stamping/embossing die (31), with counterpressure dies (33) for trapezoidal embossing dies, with a ring-chamfer embossing die and a window-contour die, as well as with a tooth-contour cutting die (36), an external-contour cutting die (37), an internal-contour cutting die (38) are disposed in tool stages (10 to 17) on the upper tool (40); and
**in that** hook-shaped wiping and holding elements (42) which at a plurality of tool stages, so as to be directed in a transverse and opposing manner on both sides, position and hold a sheet-metal strip (50) or a cut-out sheet-metal disk-holding skeleton received at the end side in a guide groove, likewise a separating cutting installation (39) for severing a sheet-metal disk-holding skeleton in a transverse direction, and female dies of position-seeking dies (30) and cutting dies (36 to 38), are disposed on and in the lower tool (41) of a multi-stage cutting and forming tool.

5. Tool for producing trapezoidal tooth support rings by the method described in Claims 1 to 3, **characterized in that**
position-seeking dies (30) for positioning blanks (51) in the tool stages of stamping (11), impressing (12), pre-embossing (13), intermediate embossing (14) and final embossing (15) are disposed so as to oppose embossing and cutting dies on the lower tool (41) of a multi-stage cutting and forming tool; and **in that** three trapezoidal-shape embossing dies (32) for the pre-embossing (13), the intermediate embossing (14), and the final embossing (15) of trapezoidal shapes form a tool stage on the lower tool (40).

6. Tool for producing trapezoidal tooth support rings according to Claims 4 and 5,
**characterized in that**
the position-seeking dies (30) are a component part of stamping/embossing dies (31) or trapezoidal-shape embossing dies (32) or counterpressure dies (33) configured in a bell-shaped manner, and are conjointly functionally moved.

7. Tool for producing trapezoidal tooth support rings according to Claims 4 to 6,
**characterized in that**
the front seeking part of each position-seeking die (30) is configured so as to be conical, having a diameter or cross-sectional dimension that is smaller than the diameter or cross-sectional dimensions of positioning round bores (52), positioning triangle bores (53), or of positioning windows (54) on a sheet-metal part (48) or on a ring part (49).

## Revendications

1. Procédé de fabrication de bagues de support à denture trapézoïdale, qui sont utilisées sur des corps de couplage dans des systèmes de synchronisation de boîtes de vitesses de véhicules, à partir de platines préfabriquées ou à partir de bandes de tôle déroulées d'une bobine, **caractérisé en ce que** dans un outil de coupe et de formage à plusieurs étages sont disposées les étapes de procédé suivantes, se déroulant l'une après l'autre dans la direction de déroulement du procédé (8) sur des platines préfabriquées (51) fournies dans la direction de chargement (7) ou sur des bandes de tôle (50) fournies le long de la direction de chargement de bandes de tôle (6):
- découpe (10) d'ouvertures de positionnement et d'ouvertures d'équilibrage des contraintes (55) sous forme de traversées intérieures dans les pièces de tôle rondes (48),
- pré-positionnement en position centrale (1) de concert avec une perforation suivante par le côté supérieur (11) et un marquage simultané par le côté inférieur (12) d'un bord extérieur de chaque pièce de tôle (48),
- positionnement précis en position centrale (2) de concert respectivement avec un premier marquage (13) de la forme trapézoïdale, un marquage intermédiaire (14) de la forme trapézoïdale et une perforation de pré-positionnement en relief et un marquage final (15) de la forme trapézoïdale,
- positionnement précis en position centrale calé en rotation (3) comme résultat d'un ré-usinage des ouvertures de positionnement dans chaque pièce de tôle (48) par découpe (10) simultanément au marquage final (15) de la forme trapézoïdale et de la découpe totale (16) de la forme annulaire, avec le découpage (17) de la forme trapézoïdale de profilage et la découpe intérieure du déchet (18) de la pièce de tôle (48) hors de la pièce annulaire (49) ou la découpe de déchet (19) des grilles de support de disques de tôle,
- positionnement précis de la bague calée en rotation (4) comme résultat de la découpe (10) de fenêtres de positionnement (54) dans chaque pièce annulaire (49) de concert avec le marquage ultérieur des bords (20), le marquage (22) d'un chanfrein périphérique sur chaque pièce annulaire (49) et le marquage (21) des retraits, ainsi que
- un positionnement de transport (5) sur un dispositif de transport des bagues terminées (23) en direction d'un accumulateur de bagues terminées (24), ainsi qu'une évacuation particulière des déchets hors de l'outil de formage et de coupe à plusieurs étages.

2. Procédé de fabrication de bagues de support à denture trapézoïdale selon la revendication 1, **caractérisé en ce que** les ouvertures de positionnement dans les pièces de tôle (48) des platines (51) ou des bandes de tôle (50), utilisées pour les positionnements (1 à 4), sont, en fonction de la direction de déroulement du procédé (8),
- lors du pré-positionnement en position centrale (1) et
- lors du positionnement précis en position centrale (2) au moins un trou rond de positionnement (52),
- lors du positionnement précis en position centrale calé en rotation (3) un trou triangulaire de position centré (53), et
- lors du positionnement précis de la bague calée en rotation (4) un agencement frontal symétrique d'au moins deux fenêtres de positionnement (54) dans la pièce annulaire (49),
et **en ce que** les positionnements (1 à 4) au moyen des poinçons de recherche de position plus longs (30) déplacés par l'outil supérieur (40) ou par l'outil inférieur (41) dans les ouvertures de positionnement des pièces de tôle (48) et des pièces annulaires (49) commencent plus tôt que les étapes de procédé qui sont exécutées au moyen de poinçons de coupe et de marquage plus courts.

3. Procédé de fabrication de bagues de support à denture trapézoïdale selon une revendication 1 et 2, **caractérisé en ce que** toutes les étapes de procédé peuvent être exécutées pas à pas de façon simultanée et coordonnée au moyen de l'outil supérieur (40) déplacé par une presse et peuvent être contrôlées par des demandes d'état par des capteurs, et **en ce qu'**une consolidation de la matière stabilisant les bords de la forme trapézoïdale et de la denture dans la pièce annulaire (49) peut être réalisée au moyen des étapes de procédé de perforation (11), marquage d'un bord extérieur (12) et marquage (13, 14, 15).

4. Outil pour la fabrication de bagues de support à denture trapézoïdale selon le procédé décrit dans les revendications 1 à 3, **caractérisé en ce que** des poinçons de recherche de position (30), avec lesquels une bande de tôle (50) est positionnée dans les ouvertures de positionnement de pièces de tôle (48), sont disposés en étages d'outil (10 à 17) sur l'outil supérieur (40) conjointement à un poinçon de marquage perforant (31), des poinçons de contrepression (33) pour des poinçons de marquage de forme trapézoïdale, un poinçon de marquage de chanfrein périphérique et un poinçon de marquage de contours de fenêtres, ainsi qu'un poinçon de coupe de contour de dent (36), un poinçon de coupe de contour extérieur (37), un poinçon de coupe de contour intérieur (38), et
des éléments de raclage et de maintien en forme de crochets (42), qui positionnent et maintiennent à plusieurs étages d'outil, de part et d'autre transversalement et en direction opposée, une bande de tôle (50) ou une grille de maintien de disque de tôle découpée, logée frontalement dans une rainure de guidage, tout comme un dispositif de coupe (39), pour la coupe transversale d'une grille de maintien de disque de tôle, et des matrices de poinçons de recherche de position (30) et de poinçons de coupe (36 à 38) sont disposés sur et dans l'outil inférieur (41) d'un outil de coupe et de formage à plusieurs étages.

5. Outil pour la fabrication de bagues de support à denture trapézoïdale selon le procédé décrit dans les revendications 1 à 3, **caractérisé en ce que** des poinçons de recherche de position (30) pour le positionnement de platines (51) dans les étages d'outil de perforation (11), marquage (12), premier marquage (13), marquage intermédiaire (14) et marquage final (15), sont disposés en direction opposée aux poinçons de marquage et de coupe sur l'outil inférieur (41) d'un outil de coupe et de formage à plusieurs étages, et trois poinçons de marquage de forme trapézoïdale (32) pour le premier marquage (13), le marquage intermédiaire (14) et le marquage final (15) de formes trapézoïdales forment un étage d'outil sur l'outil inférieur (40).

6. Outil pour la fabrication de bagues de support à denture trapézoïdale selon une revendication 4 et 5, **caractérisé en ce que** les poinçons de recherche de position (30) font partie de poinçons de marquage perforants réalisés en forme de cloche (31) ou de poinçons de marquage de formes trapézoïdales (32) ou de poinçons de contrepression (33) et sont déplacés fonctionnellement ensemble.

7. Outil pour la fabrication de bagues de support à denture trapézoïdale selon une revendication 4 à 6, **caractérisé en ce que** la partie de recherche antérieure de chaque poinçon de recherche de position (30) est de forme conique avec une dimension de diamètre ou de section transversale plus petite que la dimension de diamètre ou de section transversale de trous de positionnement ronds (52), de trous de positionnement triangulaires (53) ou de fenêtres de positionnement (54) sur une pièce de tôle (48) ou sur une pièce annulaire (49).
